# EUROPÄISCHE PATENTSCHRIFT

(11) **EP 4 162 188 B1**
(45) Veröffentlichungstag und Bekanntmachung des Hinweises auf die Patenterteilung: **01.01.2025**
(21) Anmeldenummer: 21730132.4
(22) Anmeldetag: 26.05.2021
(51) Int. Cl.: F16L 37/098

(54) **VORRICHTUNG ZUM VERBINDEN ZWEIER RÖHRENFÖRMIGER OBJEKTE**
DEVICE FOR CONNECTING TWO TUBULAR OBJECTS
DISPOSITIF POUR CONNECTER DEUX OBJETS TUBULAIRES

(30) Priorität: 05.06.2020 DE 102020115021
(43) Veröffentlichungstag der Anmeldung: 12.04.2023
(73) Patentinhaber: NORMA Germany GmbH, 63477 Maintal (DE)
(72) Erfinder: SCHINDLER, René, 63477 Maintal (DE); KINTEA, Daniel, 63477 Maintal (DE); SCHNEIDER, David, 63477 Maintal (DE)
(74) Vertreter: Patentanwälte Olbricht Buchhold Keulertz
(86) Internationale Anmeldenummer: PCT/EP2021/064112
(87) Internationale Veröffentlichungsnummer: WO 2021/244925

(56) Entgegenhaltungen:
- US-A1- 2007 120 362
- US-A1- 2019 390 808
- US-B1- 6 199 920

## Beschreibung

Die Erfindung betrifft eine Vorrichtung zum Verbinden zweier röhrenförmiger Objekte gemäß dem Oberbegriff von Anspruch 1.

Derartige Vorrichtungen sind dazu in der Lage, röhrenförmige Objekte miteinander zu verbinden, die eine vorwiegend starre Form aufweisen und aus einem festen Material aufgebaut sind. Zu diesem Zweck ist bekannt, ein Stutzengehäuse mit einem daran angeordneten Stutzen zu verwenden, der in eines der röhrenförmigen Objekte gesteckt werden kann. Das andere röhrenförmige Objekt kann in Form eines Stutzens ausgebildet oder damit ausgestattet sein. Letzterer wird dann in ein Einsteckende einer derartigen Vorrichtung eingesteckt und dort verriegelt.

Es ist bei bekannten Vorrichtungen erforderlich, eine manuelle Verriegelung sowie eine optische Kontrolle der durchgeführten Verriegelung vorzunehmen. Dies kann jedoch insbesondere bei schwer zugänglichen Stellen in komplexen technischen Systemen aufwändig oder schwierig sein. Zudem sind bekannte Vorrichtungen durch Verwendung von drei oder mehr Bauteilen in ihrer Herstellung aufwändig und mitunter kostenintensiv.

WO 2005/047753 A1 zeigt eine Kupplungsvorrichtung zum Verbinden von zwei steifen, röhrenförmigen Objekten, wobei die Vorrichtung ein Buchsenteil, ein Steckerteil und ein dazwischen anbringbares hülsenförmiges Element aufweist. Zum Einschnappen der Komponenten miteinander sind elastische Zungen vorgesehen. Eine weitere Vorrichtung ist aus US 2007/120362 A1 bekannt.

Aufgabe der Erfindung ist es, eine Vorrichtung zum Verbinden zweier röhrenförmiger Objekte vorzuschlagen, bei der eine Verriegelung sicher und ohne größeren Aufwand gewährleistet werden kann und eine möglichst kostengünstige Herstellung möglich ist.

Hauptmerkmale der Erfindung sind im kennzeichnenden Teil von Anspruch 1 angegeben. Ausgestaltungen sind Gegenstand der Ansprüche 2 bis 10.

Es wird eine Vorrichtung zum Verbinden zweier röhrenförmiger Objekte vorgeschlagen, die Vorrichtung aufweisend ein Stutzengehäuse und ein Sicherungselement, wobei das Stutzengehäuse einen Hülsenabschnitt mit einer Aufnahmeöffnung aufweist, wobei das Sicherungselement komplementär zu der Aufnahmeöffnung geformt ist und drehbar in der Aufnahmeöffnung angeordnet ist und eine Einstecköffnung zur Aufnahme eines Stutzens aufweist, wobei das Sicherungselement in Umfangsrichtung voneinander beabstandete Sicherungslaschen aufweist, die jeweils einen radial nach innen gewandten Sicherungskörper zum Eingreifen in Formmerkmale eines eingesteckten Stutzens aufweisen und sich von einer ersten radialen Position in eine radial außenliegende zweite radiale Position bewegen lassen. Gemäß der Erfindung ist vorgesehen, dass das Stutzengehäuse für jede Sicherungslasche eine radial nach innen abgeschrägte Rampenfläche aufweist, auf der die jeweilige Sicherungslasche mit einer Auflagefläche aufliegt, wobei die Rampenfläche und die Auflagefläche derart geformt sind, dass durch Drehen des Sicherungselements um eine Mittelachse des Stutzengehäuses in eine erste Richtung die Sicherungslaschen in die zweite radiale Position gedrängt werden und das Sicherungselement in einem unbelastetem Zustand durch Zurückfedern der Sicherungslaschen in die erste Position in eine der ersten Richtung entgegengesetzte zweite Richtung zurückgedreht wird.

Die Vorrichtung ist folglich dazu ausgebildet, zwei röhrenförmige Objekte miteinander zu verbinden, von denen eines mit dem Stutzengehäuse koppelbar ist und das andere ein Verbindungselement, beispielsweise einen Stutzen, zum Einstecken in die Einstecköffnung des Sicherungselements aufweist. Es sind jedoch auch andere Einrichtungen denkbar, die an dem Stutzengehäuse ausbildbar sind. Die Ausbildung ist für die Funktion der Vorrichtung nicht erfindungswesentlich und soll nachfolgend nicht als Beschränkung aufgefasst werden.

Das Sicherungselement ist dazu vorgesehen, das Verbindungselement im eingesteckten Zustand zu sichern, sodass es nicht selbsttätig, durch Vibration, Trägheitskräfte oder durch ein darin strömendes Fluid oder ähnliches, aus dem Sicherungselement herausrutschen kann. Hierzu könnte das Verbindungselement eine oder mehrere umlaufende Nuten an einer äußeren Mantelfläche aufweisen, in die die Sicherungskörper der Sicherungslaschen in radialer Richtung eindringen können. Das Verbindungselement wird dann in axialer Richtung gesichert.

Das Sicherungselement und der hülsenförmige Abschnitt sind derart komplementär zueinander ausgebildet, dass das Sicherungselement bevorzugt in der Aufnahmeöffnung verrastet oder auf andere Weise gesichert ist. Dazu könnten radiale Ausnehmungen in dem Stutzengehäuse vorgesehen sein, in die Teile der Sicherungslaschen oder damit verbundene Elemente hineinragen. Dies wird weiter nachfolgend weiter erläutert.

Das Sicherungselement könnte eine etwa ring- oder hülsenförmige Basis aufweisen, die die Einstecköffnung aufweist. Auf einer von der Einstecköffnung abgewandten Seite des Sicherungselements können sich die Sicherungslaschen in axialer Richtung erstrecken. Die Basis des Sicherungselements kann drehbar mit dem Stutzengehäuse gekoppelt sein, so dass sich durch Drehen des Sicherungselements die Sicherungslaschen in Umfangsrichtung des Stutzengehäuses bewegen lassen. Es kann sich anbieten zwei, drei, vier oder mehr Sicherungslaschen über den Umfang zu verteilen.

In einem von den Sicherungslaschen überlappenden Bereichen weist das Stutzengehäuse jeweils eine Rampenfläche auf, auf der eine zugehörige Auflagefläche der Sicherungslasche aufliegt. Dabei ist die Rampenfläche jeweils radial nach innen abgeschrägt, sodass durch Drehen des Sicherungselements ein Gleiten der Auflagefläche auf der Rampenfläche erfolgt. Aufgrund der radial nach innen gerichteten Abschrägung der Rampenfläche erfolgt durch die Rotation in die erste Richtung und das dadurch resultierende Gleiten eine radial auswärts gerichtete Bewegung der Sicherungslaschen. Durch Loslassen des Sicherungselements drücken die Auflageflächen auf die zugehörigen Rampenfläche und drehen dadurch das Sicherungselement in die entgegengesetzte zweite Richtung zurück. Die Sicherungslaschen erreichen dabei wieder die erste Position. Die Auflagefläche und die Gleitfläche sind so ausgebildet, dass sie ein ungehindertes Zurückdrehen erlauben.

Der besondere Vorteil der erfindungsgemäßen Vorrichtung liegt demgemäß darin, dass ein leichtes Montieren und ein leichtes Demontieren eines Stutzens in der Einstecköffnung ermöglicht wird. Ein Benutzer muss lediglich das Sicherungselement in die erste Richtung drehen, sodass die Sicherungslaschen radial nach außen gedrängt werden und dadurch der Stutzen oder ein anderes Verbindungselement freigegeben wird oder eingesteckt werden kann. Da ein anschließendes Zurückdrehen des Sicherungselements und ein Zurückdrängen der Sicherungslaschen in die erste radiale Position erfolgt, muss der Benutzer nach dem Einstecken des Stutzens keine weiteren Arbeitsschritte vollziehen. Folglich kann die erfindungsgemäße Vorrichtung an einem Verbindungselement einer Baugruppe angeordnet sein, um dann in einer Endmontage an ein anderes röhrenförmiges Objekt angeschlossen zu werden. Durch die Ausgestaltung der Vorrichtung kann sichergestellt werden, dass die Vorrichtung sich nicht von dem Stutzen löst. Die betreffende Baugruppe kann daher vereinfacht montiert werden. Die automatische Verriegelung führt dazu, dass sich die Vorrichtung stets, d.h. verbunden oder nicht verbunden, stets in einem geschlossenen Zustand befindet. Ein Verbleib in einem geöffneten Zustand ist daher nicht möglich.

In einer vorteilhaften Ausführungsform sind die Sicherungslaschen radial federnd ausgebildet. Das radiale Federn kann etwa durch Auswahl eines dafür geeigneten Kunststoffmaterials gewährleistet werden. Die Sicherungslaschen weisen eine Grundform auf, die das Sicherungselement in einem unbelasteten Zustand einnimmt. Werden die Sicherungslaschen beim Gleiten auf der Rampenfläche durch eine nach außen wirkende Radialkraft beaufschlagt, können Sie dieser Kraft folgen, indem sie eine radiale Ausweichbewegung vornehmen. Dabei ist es sinnvoll, einen Bereich besonders dafür auszubilden. Wie weiter nachfolgend erläutert, kann dieser Bereich jeweils an einem freien Ende der Sicherungslaschen angeordnet sein.

Es ist außerdem vorteilhaft, wenn die Rampenfläche einen radial außenliegenden ersten Abschnitt und einen radial innenliegenden zweiten Abschnitt aufweist, wobei der erste Abschnitt geradlinig verläuft und der zweite Abschnitt radial stärker nach innen abgeschrägt ist als der erste Abschnitt. Der erste Abschnitt weist dann eine ebene Fläche auf, die durchgehend gerade ist. In einer Ebene, die senkrecht zu der Mittelachse des Stutzengehäuses verläuft, bildet der erste Abschnitt folglich eine gerade Strecke aus. Hierzu verläuft winklig der zweite Abschnitt und ist stärker nach innen abgeschrägt. Dies bedeutet, dass der zweite Abschnitt sich entlang der Laufrichtung der Rampenfläche radial stärker nach innen bewegt als der erste Abschnitt. Beim Drehen des Sicherungselements kommt die Auflagefläche zunächst mit dem zweiten Abschnitt in Berührung und rutscht anschließend auf den ersten Abschnitt. Der zweite Abschnitt führt zu einer stärkeren anfänglichen Biegung der Sicherungslaschen, wobei der Zuwachs der Biegung anschließend, d.h. beim Erreichen des ersten Abschnitts, etwas schwächer wird.

Der erste Abschnitt könnte in einer zu der Mittelachse senkrecht liegenden Ebene eine Richtungsachse definieren, die an der Mittelachse vorbeiläuft. Der erste Abschnitt könnte folglich ein Kreissegment an dem Stutzengehäuse definieren, welches einen Mittelpunktswinkel deutlich unterhalb von 180° aufweist. Der Winkel des ersten Abschnitts gegenüber einer Tangente, die an dem radial äußeren Ende der Rampenfläche gebildet ist und auf einer Umfangsfläche des Stutzengehäuses liegt, könnte beispielsweise deutlich unterhalb von 45° liegen.

Es ist bevorzugt, wenn das Sicherungselement für jede Sicherungslasche eine radiale Ausnehmung aufweist, wobei die Rampenfläche in der Ausnehmung angeordnet ist und an einem umfangsseitigen Ende der Ausnehmung endet. Eine solche Ausnehmung ist dafür geeignet, eine Sicherungslasche aufzunehmen. Die Sicherungslasche wäre dann zumindest teilweise in der Lage, radial nach außen gedrängt zu werden, wobei sie dann durch die Ausnehmung eine ausreichende Bewegungsfreiheit erhält. Die Ausnehmung kann zudem derart ausgebildet sein, dass die Vorrichtung durch Zusammenstecken des Sicherungselements und des Stutzengehäuses montiert werden kann und die Sicherungslasche durch dafür geeignete Formmerkmale an dem Stutzengehäuse gehalten wird.

Es ist besonders bevorzugt, wenn die Rampenfläche an dem umfangsseitigen Ende einen ersten Winkel zu einer ersten Radiuslinie ausbildet, die auf einer zur Mittelachse senkrechten Ebene liegt und sich mittig durch die Ausnehmung erstreckt, wobei der erste Winkel in einem Bereich von 72° bis 74° liegt. Die erste Radiuslinie könnte eine Symmetrielinie oder eine Mittellinie bilden und sich in der senkrecht zu der Mittelachse liegenden Ebene mittig durch die Ausnehmung erstrecken. Die Rampenfläche ist an einem umfangseitigen Ende der Ausnehmung angeordnet und die Sicherungslasche mit der Auflagefläche muss sich zu diesem umfangseitigen Ende bewegen, sodass die Auflagefläche durch die Rampenfläche radial nach außen gedrängt wird. Unter anderem die Wahl des ersten Winkels ist für die Bewegung der Auflagefläche radial nach außen dimensionierend. Damit ein Verkanten oder Verklemmen verhindert wird, ist der Winkel auf den genannten Bereich gewählt.

Zwischen dem ersten Abschnitt und dem zweiten Abschnitt kann bevorzugt ein abgerundeter Übergangsabschnitt angeordnet sein, der sich tangentenstetig an den ersten Abschnitt und den zweiten Abschnitt anschließt. Der abgerundete Übergangsabschnitt kann eine Überleitung der Auflagefläche von dem zweiten auf den ersten Abschnitt durchführen. Durch eine abgerundete Gestalt wird das Gleiten der Auflagefläche auf der Rampenfläche verbessert.

Wie vorangehend dargestellt können die Sicherungslaschen ein von der Einstecköffnung abgewandtes freies Ende aufweisen, an dem die jeweilige Auflagefläche angeordnet ist. Damit wird das Federn ermöglicht Sicherungselements und die radiale Bewegung der Auflagefläche begünstigt oder bereitgestellt.

Erfindungsgemäß weist die Auflagefläche einen Einlaufabschnitt und einen Übergangsabschnitt auf, wobei der Einlaufabschnitt radial nach innen abgeschrägt ist und der Übergangsabschnitt radial nach außen abgeschrägt ist. Der Übergangsabschnitt kann einen harmonischen Übergang zu dem Einlaufabschnitt schaffen. Der Einlaufabschnitt kommt in flächigen Kontakt mit der Rampenfläche und sorgt für die radiale Auslenkung.

Bevorzugt schließen der Einlaufabschnitt und der Übergangsabschnitt einen Krümmungsabschnitt ein, der tangentenstetig an den Einlaufabschnitt und den Rücksetzabschnitt anschließt. Das tangentenstetige Anordnen des Krümmungsabschnitts verhindert das Festklemmen der Sicherungslasche und steht einer erleichterten Gleitbewegung nicht entgegen.

Erfindungsgemäß ist der Einlaufabschnitt an einer umfangsseitigen Begrenzungskante der betreffenden Sicherungslasche angeordnet und bildet einen zweiten Winkel zu einer zweiten Radiuslinie aus, die auf einer zur Mittelachse senkrechten Ebene liegt und sich mittig durch die Sicherungslasche erstreckt, wobei der zweite Winkel in einem Bereich von 55° bis 65° liegt. Der zweite Winkel begünstigt das Zurückdrehen in die erste Position.

Der Übergangsabschnitt könnte zudem einen dritten Winkel mit der zweiten Radiuslinie einschließen, der in einem Bereich von 73° bis 80° liegt.

Weiterhin könnten die Sicherungslaschen in der zweiten Position über die Ausnehmung hinaus radial nach außen stehen und als Anzeigeelement zum Anzeigen einer geöffneten Vorrichtung fungieren. Ein Benutzer kann dabei sofort erkennen, dass die Vorrichtung nicht ganz geschlossen ist, wenn durch die Ausnehmung ein Teil der Sicherungslasche herausragt. Dies könnte beispielsweise für einen unvollständig eingesteckten Stutzen stehen, in den die Sicherungskörper in radialer Richtung nicht ganz einrasten.

Schließlich kann das Sicherungselement in einer vorteilhaften Ausführungsform mindestens ein Griffelement zum Einleiten einer Drehung aufweisen. Damit wird das Einleiten der Drehung für einen Benutzer deutlich vereinfacht, indem das Stutzengehäuse mit einer Hand gegriffen wird und das Griffelement mit der anderen Hand und so das Drehen ermöglicht wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine dreidimensionale, teilgeschnittene Darstellung der Vorrichtung;
- Fig. 2: einen Längsschnitt der Vorrichtung;
- Fig. 3: eine Detailansicht der Vorrichtung;
- Fig. 4: einen Detail des Längsschnitts der Vorrichtung;
- Fig. 5: eine Schnittdarstellung mit einer Schnittebene quer zur Mittelachse;
- Fig. 6: ein Draufsicht auf das Sicherungselement; und
- Fig. 7: eine Detailansicht.

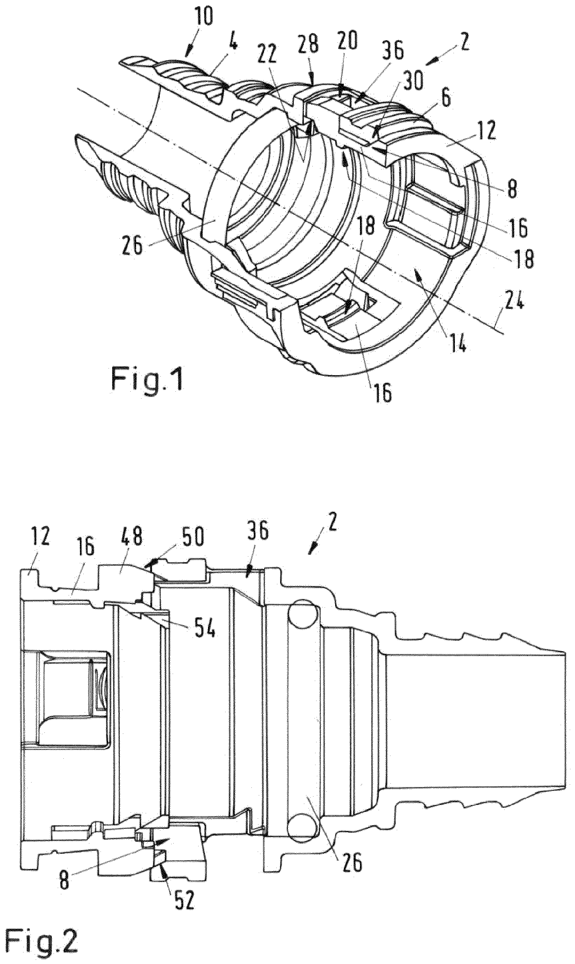

Fig. 1 zeigt eine Vorrichtung 2 zum Verbinden zweier röhrenförmiger Objekte in einer teilgeschnittenen, dreidimensionalen Darstellung. Die Vorrichtung 2 weist ein Stutzengehäuse 4 und ein Sicherungselement 12 auf, das in das Stutzengehäuse 4 eingesteckt ist. Das Stutzengehäuse 4 weist einen Hülsenabschnitt 6 mit einer Aufnahmeöffnung 8 auf, in die das Sicherungselement 12 eingesteckt ist. Zum Verbinden mit einem ersten röhrenförmigen Körper weist das Stutzengehäuse 4 einen Stutzenabschnitt 10 auf, der beispielhaft mit einem rillenförmigen Profil versehen ist, das sich mit dem ersten röhrenförmigen Körper verkeilen kann.

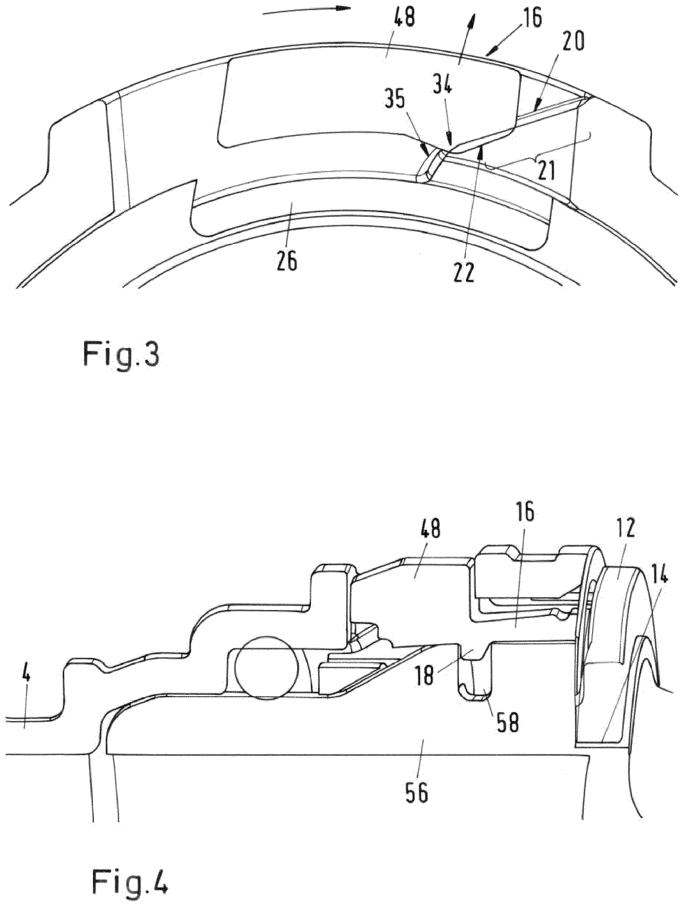

Das Sicherungselement 12 ist drehbar in der Aufnahmeöffnung 8 angeordnet und weist eine Einstiegsöffnung 14 zur Aufnahme eines Stutzens auf. Dieser wird etwa in Fig. 4 gezeigt. Weiterhin weist das Sicherungselement 12 in Umfangsrichtung voneinander beabstandete Sicherungslaschen 16 auf, die jeweils einen radial nach innen gewandten Sicherungskörper 18 besitzen. Diese dienen dazu, in eine komplementär geformte Nut eines in der Einstecköffnung 14 angeordneten Stutzens einzugreifen. Die Sicherungslaschen 16 sind ferner elastisch verformbar und können sich von einer ersten radialen Position (hier gezeigt) in eine radial außenliegende zweite radiale Position bewegen lassen. Ein Stutzen, der in die Einstecköffnung 14 gesteckt wird, könnte demgemäß mit den Sicherungskörpern 18 verrastet werden. Die Sicherungslaschen 16 weisen weiterhin jeweils ein festes Ende 30 und ein freies Ende 28 auf. Sie sind insgesamt federnd, sodass sich das freie Ende 28 radial bewegen lässt.

Das Stutzengehäuse 4 weist für jede Sicherungslasche 16 eine radial nach innen abgeschrägte Rampenfläche 20 auf. Die jeweilige Sicherungslasche 16 liegt mit einer radial innenliegenden Auflagefläche 22 auf der betreffenden Rampenfläche 20 auf. Die Rampenfläche 20 und die Auflagefläche 22 sind dabei derart geformt, dass durch Drehen des Sicherungselements 12 um eine Mittelachse 24 des Stutzengehäuses 4 in eine erste Richtung die Sicherungslaschen 16 in die zweite radiale Position gedrängt werden. Die erste Richtung entspricht dabei in dem gezeigten Ausführungsbeispiel einer Rotation im Uhrzeigersinn. Das Sicherungselement 12 wird indes in einem unbelasteten Zustand, das heißt beim Loslassen und durch Zurückfedern der Sicherungslasche 16 in die erste Position, in eine der ersten Richtung entgegengesetzte zweite Richtung zurückgedreht. Die zweite Richtung entspricht folglich einer Drehung entgegen dem Uhrzeigersinn. Die Vorrichtung 2 ist dadurch dazu ausgebildet, durch ein Verdrehen des Sicherungselements 12 in eine Richtung einen in der Einstecköffnung 14 befindlichen Stutzen zu lösen und ohne weiteres Zutun automatisch wieder in den Verriegelungszustand mit radial nach innen zurückgeschwenkten Sicherungslaschen 16 zurückzukehren. Die Vorrichtung 2 ist folglich selbstsichernd.

Die Vorrichtung 2 weist ferner ein Dichtelement in Form eines Dichtungsrings 26 auf, der in dem Stutzengehäuse 4 angeordnet ist und dazu ausgebildet ist, in einen bündigen Kontakt mit einer Stirnseite eines in die Einstecköffnung 14 gesteckten Stutzens zu geraten. Hierdurch wird die Fluidverbindung zwischen dem Stutzen und dem Stutzenabschnitt 10 abgedichtet.

In Fig. 2 ist die Vorrichtung 2 aus einer anderen Perspektive gezeigt. Hier ist das Sicherungselement 12 noch nicht vollständig in die Aufnahmeöffnung 8 eingesteckt. Es sind die Vorsprünge 48 der Sicherungslasche 16 erkennbar, welche jeweils eine radial nach innen angeschrägte Einlauffläche 50 aufweisen, die mit einer radial nach außen angeschrägten Führungsfläche 52 an der Aufnahmeöffnung 8 komplementär geformt sind. Durch Aufstecken des Sicherungselements 12 werden die Sicherungslaschen 16 radial nach innen gedrängt, sodass der Vorsprung 48 beim vollständigen Einstecken des Sicherungselements 12 in eine umfangsseitige Ausnehmung 36 des Stutzengehäuses 4 gerät. Damit ist das Sicherungselement 12 montiert und kann die vorangehend geschilderte Funktion erfüllen. Das Sicherungselement 12 kann radial innerhalb der Vorsprünge 48 eine Art Anschlagring 54 aufweisen, der eine radial nach innen gerichtete Bewegung der Vorsprünge 48 begrenzt.

Fig. 3 zeigt eine detaillierte Darstellung eines Vorsprungs 48 einer Sicherungslasche 16, bei der die Auflagefläche 22 auf der Rampenfläche 20 des Stutzengehäuses 4 aufliegt. Dort ist ersichtlich, dass die Auflagefläche 22 und die Rampenfläche 20 miteinander korrespondierend ausgeformt sind. Beim Drehen des Sicherungselements 12 im Uhrzeigersinn wandert die Sicherungslasche 16 radial nach außen.

Fig. 4 zeigt das Sicherungselement 12 im eingesteckten Zustand in dem Stutzengehäuse 4. In der Einstecköffnung 14 befindet sich ein eingesteckter Stutzen 56, der eine umlaufende Nut 58 als Formmerkmal besitzt. Diese ist ausgebildet, dass die Sicherungskörper 18 der Sicherungslasche 16 in die Nut 58 greifen. In dieser Darstellung ist die Sicherungslasche 16 in der ersten Position, d.h. radial innenliegend, gezeigt. Durch Drehen des Sicherungselements 12 wird der Vorsprung 48 radial nach außen bewegt, sodass der Sicherungskörper 18 die Nut 58 verlässt.

Dieser entriegelte Zustand wird nur so lange beibehalten, wie ein Benutzer das Sicherungselement 12 in die erste Richtung dreht oder in der gedrehten Position festhält. Sobald das Sicherungselement 12 losgelassen wird, federn die Sicherungslaschen 16 in den in Fig. 4 gezeigten Zustand zurück.

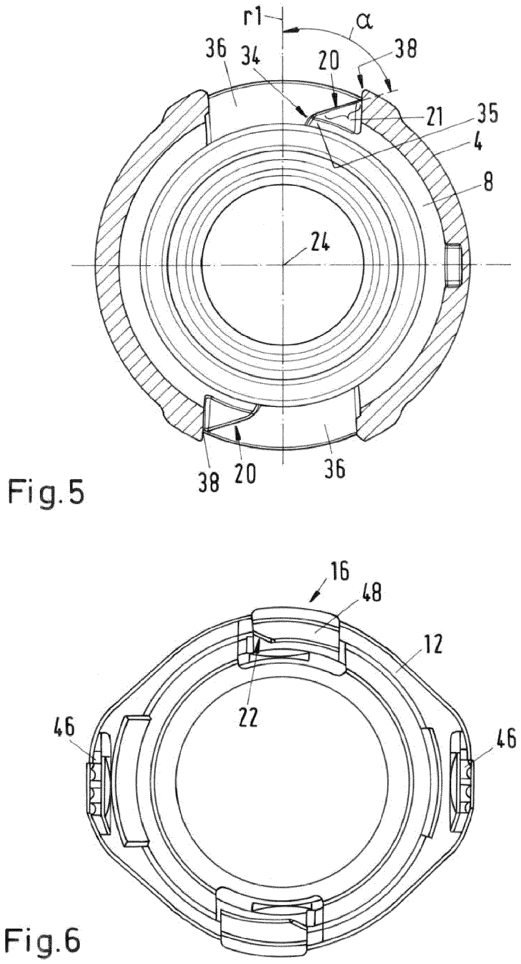

In Fig. 5 wird eine Schnittdarstellung des Stutzengehäuses 4 in einer Schnittebene senkrecht zur Mittelachse 24 gezeigt, wobei die Schnittebene an die Rampenfläche 20 angrenzend verläuft. Hier wird ein erster Winkel α gezeigt, der zwischen der Rampenfläche 20 und einer ersten Radiuslinie r1 eingeschlossen ist, die auf einer zu der Mittelachse 24 senkrechten Ebene liegt und sich dabei mittig durch die Ausnehmung 36 erstreckt. Der erste Winkel α liegt bevorzugt in einem Bereich von 72-74°. Die erste Radiuslinie r1 ist indes eine Symmetrielinie bzw. eine Mittellinie. Analog hierzu ist die Auflagefläche 22 gestaltet, wie in Fig. 3 ersichtlich.

Die Rampenfläche 20 ist dabei an einem umfangsseitigen Ende 38 der Ausnehmung 36 angeordnet und bei auf der Rampenfläche 20 aufliegender Auflagefläche 22 muss sich diese in Richtung des umfangsseitigen Endes 38 bewegen. Durch die aufeinander gleitenden Flächen 20 und 22 wird dann der Vorsprung 48 radial nach außen gedrängt. Der Sicherungskörper 18 folgt dieser Bewegung und verlässt die Nut 58 eines eingesetzten Stutzens 56.

Fig. 6 zeigt eine Draufsicht auf eine zu dem Stutzengehäuse 4 gewandte Stirnseite des Sicherungselements 12. Hier sind die Sicherungslasche 16 bzw. die daran angeordneten Vorsprünge 48 ersichtlich. In dem gezeigten Ausführungsbeispiel sind zwei Sicherungslaschen 16 umfangsseitig um 180° versetzt angeordnet. Jeweils um 90° hiervon umfangsseitig beabstandet sind zwei einander gegenüberliegende Griffelemente 46 angeordnet, mit denen ein Benutzer das Sicherungselement 12 drehen kann.

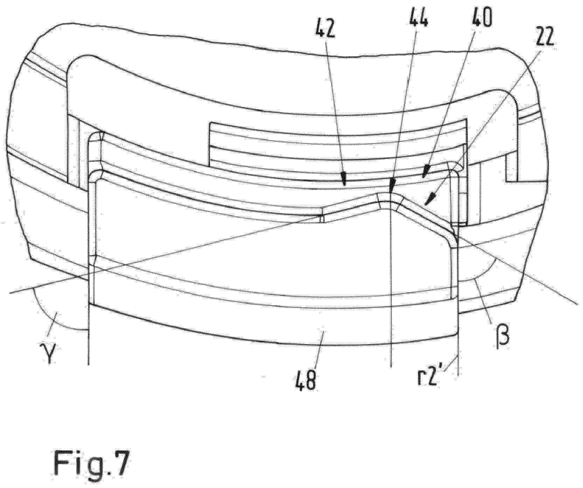

Schließlich zeigt Fig. 7 eine vergrößerte Darstellung auf einen Vorsprung 48 mit der Auflagefläche 22. Durch diese wird ein Einlaufabschnitt 40 gebildet, der von einem Krümmungsabschnitt 44 und einem Übergangsabschnitt 42 gefolgt wird. Während der zweite Winkel β analog zu dem ersten Winkel α gewählt ist, kann der Übergangsabschnitt 42 relativ willkürlich gewählt werden. Dieser weist hier einen dritten Winkel γ auf, welches mit der zweiten Radiuslinie r2 einen Winkel in einem Bereich von 73° bis 80° einschließt.

Die Erfindung ist nicht auf eine der vorbeschriebenen Ausführungsformen beschränkt, sondern in vielfältiger Weise abwandelbar.

### Bezugszeichenliste

- 2: Vorrichtung
- 4: Stutzengehäuse
- 6: Hülsenabschnitt
- 8: Aufnahmeöffnung
- 10: Stutzenabschnitt
- 12: Sicherungselement
- 14: Einstecköffnung
- 16: Sicherungslasche
- 18: Sicherungskörper
- 20: Rampenfläche
- 21: erster Abschnitt
- 22: Auflagefläche
- 24: Mittelachse
- 26: Dichtungsring
- 28: freies Ende
- 30: festes Ende
- 32: Basis
- 34: Übergangsabschnitt
- 35: zweiter Abschnitt
- 36: Ausnehmung
- 38: umfangsseitiges Ende
- 40: Einlaufabschnitt
- 42: Übergangsabschnitt
- 44: Krümmungsabschnitt
- 46: Griffelement
- 48: Vorsprung
- 50: Einlauffläche
- 52: Führungsfläche
- 54: Anschlagring
- 56: Stutzen
- 58: Nut

- α: erster Winkel
- β: zweiter Winkel
- γ: dritter Winkel
- r1: erste Radiuslinie
- r2: zweite Radiuslinie
- r2': Parallele zu zweiter Radiuslinie

## Patentansprüche

1. Vorrichtung (2) zum Verbinden zweier röhrenförmiger Objekte, die Vorrichtung aufweisend ein Stutzengehäuse (4) und ein Sicherungselement (12), wobei das Stutzengehäuse (4) einen Hülsenabschnitt (6) mit einer Aufnahmeöffnung (8) aufweist, wobei das Sicherungselement (12) komplementär zu der Aufnahmeöffnung (8) geformt ist und drehbar in der Aufnahmeöffnung (8) angeordnet ist und eine Einstecköffnung (14) zur Aufnahme eines Stutzens (56) aufweist, wobei das Sicherungselement (12) in Umfangsrichtung voneinander beabstandete Sicherungslaschen (16) aufweist, die jeweils einen radial nach innen gewandten Sicherungskörper (18) zum Eingreifen in Formmerkmale (58) eines eingesteckten Stutzens (56) aufweisen und sich von einer ersten radialen Position in eine radial außenliegende zweite radiale Position bewegen lassen, wobei das Stutzengehäuse (4) für jede Sicherungslasche (16) eine radial nach innen abgeschrägte Rampenfläche (20) aufweist, auf der die jeweilige Sicherungslasche (16) mit einer Auflagefläche (22) aufliegt, wobei die Rampenfläche (20) und die Auflagefläche (22) derart geformt sind, dass durch Drehen des Sicherungselements (12) um eine Mittelachse (24) des Stutzengehäuses (4) in eine erste Richtung die Sicherungslaschen (16) in die zweite radiale Position gedrängt werden und das Sicherungselement (12) in einem unbelastetem Zustand durch Zurückfedern der Sicherungslaschen (16) in die erste Position in eine der ersten Richtung entgegengesetzte zweite Richtung zurückgedreht wird, **dadurch gekennzeichnet, dass** die Auflagefläche (22) einen Einlaufabschnitt (40) und einen Übergangsabschnitt (42) aufweist, wobei der Einlaufabschnitt (40) radial nach innen abgeschrägt ist und der Übergangsabschnitt (42) radial nach außen abgeschrägt ist, wobei der Einlaufabschnitt (40) an einer umfangsseitigen Begrenzungskante der betreffenden Sicherungslasche (16) angeordnet ist und einen zweiten Winkel (β) zu einer zweiten Radiuslinie (r2) ausbildet, die auf einer zur Mittelachse (24) senkrechten Ebene liegt und sich mittig durch die Sicherungslasche (16) erstreckt, wobei der zweite Winkel (β) in einem Bereich von 55° bis 65° liegt.

2. Vorrichtung (2) nach Anspruch 1, **dadurch gekennzeichnet, dass** die Sicherungslaschen (16) radial federnd ausgebildet sind.

3. Vorrichtung (2) nach Anspruch 1 oder 2, **dadurch gekennzeichnet, dass** die Rampenfläche (20) einen radial außenliegenden ersten Abschnitt (21) und einen radial innenliegenden zweiten Abschnitt (35) aufweist, wobei der erste Abschnitt (21) geradlinig verläuft und der zweite Abschnitt (35) radial stärker nach innen abgeschrägt ist als der erste Abschnitt (21).

4. Vorrichtung (2) nach einem der vorhergehenden Ansprüche, **dadurch gekennzeichnet, dass** das Stützengehäuse (4) für jede Sicherungslasche (16) eine radiale Ausnehmung (36) aufweist, wobei die Rampenfläche (20) in der Ausnehmung (36) angeordnet ist und an einem umfangsseitigen Ende (38) der Ausnehmung (36) endet.

5. Vorrichtung (2) nach Anspruch 4, **dadurch gekennzeichnet, dass** die Rampenfläche (20) an dem umfangsseitigen Ende (38) einen ersten Winkel (α) zu einer ersten Radiuslinie (r1) ausbildet, die auf einer zu der Mittelachse (24) senkrechten Ebene liegt und sich mittig durch die Ausnehmung (36) erstreckt, wobei der erste Winkel (α) in einem Bereich von 72° bis 74° liegt.

6. Vorrichtung (2) nach Anspruch 3, **dadurch gekennzeichnet, dass** zwischen dem ersten Abschnitt (21) und dem zweiten Abschnitt (35) ein abgerundeter Übergangsabschnitt (34) angeordnet ist, der sich tangentenstetig an den ersten Abschnitt (21) und den zweiten Abschnitt (35) anschließt.

7. Vorrichtung (2) nach einem der vorhergehenden Ansprüche, **dadurch gekennzeichnet, dass** die Sicherungslaschen (16) ein von der Einstecköffnung (14) abgewandtes freies Ende (28) aufweisen, an dem die jeweilige Auflagefläche (22) angeordnet ist.

8. Vorrichtung (2) nach Anspruch einem der vorhergehenden Ansprüche, **dadurch gekennzeichnet, dass** der Einlaufabschnitt (40) und der Übergangsabschnitt (42) einen Krümmungsabschnitt (44) einschließen, der tangentenstetig an den Einlaufabschnitt (40) und den Übergangsabschnitt (42) anschließt.

9. Vorrichtung (2) nach Anspruch 4, **dadurch gekennzeichnet, dass** die Sicherungslaschen (16) in der zweiten Position über die Ausnehmung (36) hinaus radial nach außen stehen und als Anzeigeelement zum Anzeigen einer geöffneten Vorrichtung fungieren.

10. Vorrichtung (2) nach einem der vorhergehenden Ansprüche, **dadurch gekennzeichnet, dass** das Sicherungselement (12) mindestens ein Griffelement (46) zum Einleiten einer Drehung aufweist.

## Claims

1. Device (2) for connecting two tubular objects, the device having a connection piece housing (4) and a securing element (12), wherein the connection piece housing (4) has a sleeve portion (6) with a receiving opening (8), wherein the securing element (12) is shaped in a complementary manner with respect to the receiving opening (8) and is arranged rotatably in the receiving opening (8), and has an insertion opening (14) for receiving a connection piece (56), wherein the securing element (12) has securing tabs (16) spaced apart from one another in the circumferential direction, and each have a radially inwardly facing securing body (18) for engaging in shaped features (58) of an inserted connection piece (56) and can be moved from a first radial position into a second radial position lying radially on the outside, wherein the connection piece housing (4) has, for each securing tab (16), a ramp surface (20) which is bevelled radially inwards and on which the respective securing tab (16) rests with a supporting surface (22), wherein the ramp surface (20) and the supporting surface (22) are shaped such that, by rotation of the securing element (12) about a central axis (24) of the connection piece housing (4) in a first direction, the securing tabs (16) are pushed into the second radial position and, in an unloaded state, the securing element (12) is rotated back in a second direction opposed to the first direction by the securing tabs (16) springing back into the first position, **characterized in that** the supporting surface (22) has a lead-in portion (40) and a transition portion (42), wherein the lead-in portion (40) is bevelled radially inwards and the transition portion (42) is bevelled radially outwards, wherein the lead-in portion (40) is arranged on a defining edge of the relevant securing tab (16) on the circumferential side and forms a second angle (β) relative to a second radius line (r2) which is located on a plane perpendicular to the central axis (24) and which extends centrally through the securing tab (16), wherein the second angle (β) ranges from 55° to 65°.

2. Device (2) according to Claim 1, **characterized in that** the securing tabs (16) are configured to be radially resilient.

3. Device (2) according to Claim 1 or 2, **characterized in that** the ramp surface (20) has a radially external first portion (21) and a radially internal second portion (35), wherein the first portion (21) runs in a linear manner and the second portion (35) is bevelled radially inwards to a greater extent than the first portion (21).

4. Device (2) according to one of the preceding claims, **characterized in that** the connection piece housing (4) has a radial recess (36) for each securing tab (16), wherein the ramp surface (20) is arranged in the recess (36) and terminates at an end (38) of the recess (36) on the circumferential side.

5. Device (2) according to Claim 4, **characterized in that** the ramp surface (20) at the end (38) on the circumferential side forms a first angle (α) relative to a first radius line (r1), which is located on a plane perpendicular to the central axis (24) and which extends centrally through the recess (36), wherein the first angle (α) ranges from 72° to 74°.

6. Device (2) according to Claim 3, **characterized in that** a rounded transition portion (34) is arranged between the first portion (21) and the second portion (35), said rounded transition portion adjoining the first portion (21) and the second portion (35) in a tangentially constant manner.

7. Device (2) according to one of the preceding claims, **characterized in that** the securing tabs (16) have a free end (28) which is remote from the insertion opening (14) and on which the respective supporting surface (22) is arranged.

8. Device (2) according to one of the preceding claims, **characterized in that** the lead-in portion (40) and the transition portion (42) enclose a curved portion (44) which adjoins the lead-in portion (40) and the transition portion (42) in a tangentially constant manner.

9. Device (2) according to Claim 4, **characterized in that** the securing tabs (16) in the second position protrude radially outwardly beyond the recess (36) and function as a display element for displaying an open device.

10. Device (2) according to one of the preceding claims, **characterized in that** the securing element (12) has at least one grip element (46) for initiating a rotation.

## Revendications

1. Dispositif (2) pour relier deux objets tubulaires, le dispositif présentant un boîtier de raccordement (4) et un élément de fixation (12), le boîtier de raccordement (4) présentant une partie formant manchon (6) avec une ouverture de réception (8), l'élément de fixation (12) ayant une forme complémentaire à celle de l'ouverture de réception (8) et étant agencé de manière à être apte à tourner dans l'ouverture de réception (8) et présentant une ouverture d'insertion (14) pour recevoir une partie de raccordement (56), l'élément de fixation (12) présentant des pattes de fixation (16) espacées les unes des autres dans la direction circonférentielle, qui présentent chacune un corps de fixation (18) tourné radialement vers l'intérieur pour s'engager dans des zones (58) à forme caractéristique d'une partie de raccordement (56) insérée et qui sont aptes à être déplacées d'une première position radiale dans une deuxième position radiale située radialement à l'extérieur, le boîtier de raccordement (4) présentant pour chaque patte de fixation (16) une surface (20) en forme de rampe biseautée radialement vers l'intérieur, sur laquelle repose la patte de fixation (16) respective par une surface d'appui (22), la surface (20) en forme de rampe et la surface d'appui (22) étant formées de telle manière que, par rotation de l'élément de fixation (12) autour d'un axe central (24) du boîtier de raccordement (4) dans une première direction, les pattes de fixation (16) sont poussées dans la deuxième position radiale, et l'élément de fixation (12), dans un état non sollicité, est ramené par élasticité des pattes de fixation (16) dans la première position selon une deuxième direction opposée à la première direction, **caractérisé en ce que** la surface d'appui (22) présente une portion d'entrée (40) et une portion de transition (42), la portion d'entrée (40) étant biseautée radialement vers l'intérieur et la portion de transition (42) étant biseautée radialement vers l'extérieur, la portion d'entrée (40) étant agencée sur un bord de délimitation périphérique de la patte de fixation (16) concernée et formant un deuxième angle (β) par rapport à une deuxième ligne de rayon (r2) qui se trouve sur un plan perpendiculaire à l'axe central (24) et qui s'étend au centre de la patte de fixation (16), le deuxième angle (β) étant situé dans une gamme allant de 55° à 65°.

2. Dispositif (2) selon la revendication 1, **caractérisé en ce que** les pattes de fixation (16) sont conçues de façon à être élastiques radialement.

3. Dispositif (2) selon la revendication 1 ou la revendication 2, **caractérisé en ce que** la surface (20) formant rampe présente une première portion (21) radialement extérieure et une deuxième portion (35) radialement intérieure, la première portion (21) étant rectiligne et la deuxième portion (35) étant radialement plus inclinée vers l'intérieur que la première portion (21) .

4. Dispositif (2) selon l'une des revendications précédentes, **caractérisé en ce que** le boîtier de raccordement (4) comporte un évidement radial (36) pour chaque patte de fixation (16), la surface (20) formant rampe étant agencée dans l'évidement (36) et se terminant à une extrémité périphérique (38) de l'évidement (36).

5. Dispositif (2) selon la revendication 4, **caractérisé en ce que** la surface (20) formant rampe forme, à l'extrémité périphérique (38), un premier angle (α) par rapport à une première ligne de rayon (r1) située dans un plan perpendiculaire à l'axe central (24) et s'étendant centralement à travers l'évidement (36), le premier angle (α) étant compris dans une gamme allant de 72° à 74°.

6. Dispositif (2) selon la revendication 3, **caractérisé en ce qu'**une portion de transition arrondie (34) est aménagée entre la première portion (21) et la deuxième portion (35), laquelle se raccorde à la première portion (21) et à la deuxième portion (35) de manière tangentielle.

7. Dispositif (2) selon l'une des revendications précédentes, **caractérisé en ce que** les pattes de fixation (16) présentent une extrémité libre (28) opposée à l'ouverture d'insertion (14), sur laquelle est aménagée la surface d'appui (22) correspondante.

8. Dispositif (2) selon l'une des revendications précédentes, **caractérisé en ce que** la portion d'entrée (40) et la portion de transition (42) comprennent une portion courbée (44) qui se raccorde de manière tangentielle à la portion d'entrée (40) et à la portion de transition (42).

9. Dispositif (2) selon la revendication 4, **caractérisé en ce que**, dans la deuxième position, les pattes de fixation (16) dépassent radialement vers l'extérieur au-delà de l'évidement (36) et font office d'élément indicateur pour indiquer un dispositif ouvert.

10. Dispositif (2) selon l'une des revendications précédentes, **caractérisé en ce que** l'élément de fixation (12) présente au moins un élément de préhension (46) pour initier une rotation.
